Europäisches Patentamt

European Patent Office

Office européen des brevets

(19)

(11) Publication number: **0 084 523**

A2

# (12) EUROPEAN PATENT APPLICATION

(21) Application number: 83830001.0

(22) Date of filing: 04.01.83

(51) Int. Cl.³: **B 05 B 13/04**
**B 05 D 1/02**

(30) Priority: 15.01.82 IT 1912782

(43) Date of publication of application:
27.07.83 Bulletin 83/30

(84) Designated Contracting States:
BE DE FR GB SE

(71) Applicant: BASFER S.p.A.
Via Iseo, 60
Monza (Milan)(IT)

(72) Inventor: Davini, Giorgio
Viale Suzzani, 283
Milan(IT)

(74) Representative: Zorzoli, Franco
c/o BUGNION S.p.A. Via Carlo Farini 81
I-20159 Milan(IT)

(54) Process for automatically painting pieces fed in along a processing line and apparatus capable of performing the same process.

(57) Process for automatically painting pieces fed in along a processing line which utilizes on the line itself at least a painting machine, such as a so-called painting robot, preferably of the kind provided with an articulated arm, carrying a spraying device and controlled, by means of corresponding actuators and electrical position transducers, by an electronic equipment suitable to store a number of predetermined processing procedures and to pilot the painting machine according to said procedures, so that said spraying device can be operated in space, time and mode according to a desired programming.

Said painting machine can move with alternate backward and forward motion in a direction parallel to the axis of the processing line and can vary its relative speed at will with respect to pieces to be painted.

./...

EP 0 084 523 A2

FIG. 1

- 1 -

## Process for automatically painting pieces fed in along a processing line and apparatus capable of performing the same process

- o -

The present invention relates to a process for automatic ally painting pieces fed in along a processing line which utilizes on the line itself at least a painting machine, such as a so-called painting robot, preferably of the kind provided with an articulated arm, carrying a spraying device controlled, by means of corresponding actuators and electrical position transducers, by an electronic equipment suitable to store a number of predetermined processing procedures and to pilot the painting machine according to said procedures so that said spaying device can be operated in space, time and mode according to a desired program and in a repeated manner.

According to the methods actually in use, the automatic painting of pieces (for example the bearing body of cars) f e d   in along a processing line takes place by arranging a certain number of painting robots in predetermined fixed positions at the sides of said line, each robot being scheduled to carry out the painting of a certain portion of said pieces. The processing line conveyer is caused to advance continuously, normally at a constant speed, and the programming of the painting robots is based on this speed, the spraying devices of which being moved so that they can reach the respective areas to be painted.

In order to store the different processing steps in an electronic device, which is entrusted to give back the different commands in a second time and according to a predetermined routine, prior studies carried out by the same applicant have found it is possible to use a teaching device having a similar but heavier structure with respect to that of the painting robot which will have to carry out the painting program according to a predetermined routine, said teaching device being manually controlled by a skilled operator who will cause the spraying device to execute the most appropriate processing procedure in connection with the piece which comes on along the processing line.

These methods of the known art have reached good results; however they still have several drawbacks: for example they give rise to unevenness and defects in painting above all when the conveyer which feeds in the pieces to be painted is caused to stop or to slow down. In fact, if the conveyer goes for some reason to a lower speed than that rated, excessive increases in the thickness of the applied paint occur and dropping or the like may even take place. In fact, in order to have an excellent atomization the supply of paint from each spraying device should take place according to nearly steady amounts in the unit of time.

It should also be noted that, if it is necessary to stop the conveyer, the supply of paint is interrupted during the deceleration step in order to avoid an excessive paint accumulation on the piece being painted, this interruption occurring when the speed goes below a predetermined value. Likewise, when the movement begins again, during the acceleration step, the paint supply is

O084523

- 3 -

caused to begin when the speed is over said predetermined value. It is therefore possible to avoid an excessive paint accumulation but there is a complete lack of paint supply each time the line stops and starts again, which causes the non-painting of some areas on the pieces being painted.

It is not always possible to find a remedy for this drawback by manually touching up the piece; in fact, before this can take place the paint applied has already partially dried and the overlapping of fresh paint creates uneven areas. It is therefore necessary to paint again the whole piece showing non-painting areas, which gives rise to higher cost prices.

A further drawback of the automatic painting methods actually in use consists in that, as the processing line must always be in movement during the normal running in order to attain a continuous production at a high production rate, said robots cannot always carry out complete and regular paintings, even when the conveyer does not suddenly stop or slow down. In fact some areas of the workpiece are often difficult to paint and the continuous advancing of the piece does not allow the robot to work properly, for example because the passage time of said areas is too short or because the orientation of said areas is not suitable for a correct projection of a paint spray thereon, as each robot must always "wait" for the piece being painted to be at the right distance.

Practically it is nearly always necessary a manual retouch subsequent to the automatic painting in order to complete the same painting, which involves a large use of labour and an increase in cost prices.

A still further drawback of the automatic painting methods actually in use consists in that the programming of said painting robots is too much appro x imative, which does not allow to fully exploit the possibilites of movement of same. In fact, as above stated, the teaching step, i.e. the storing of processing procedure by an electronic device is carried out with the aid of an operator which execute the painting of a piece which is fed in along the processing line. Even if several experiments can be made in order to choose the best painting, this step is always rather approximative as the operator must always act uninterruptedly, directing the spraying device towards a piece in a continuous movement, often executing inexact movements due to moments of inertia and other personal factors, and being furthermore unable to stop the production line; these inaccuracies will then be repeated during the following cycles controlled by the electronic computer.

The main object of the present invention is to obviate the above drawbacks related to known systems, by accomplishing an automatic painting process fitted for carrying out regular and uniform paintings over the whole area, whether the conveyer which causes the pieces being painted to advance moves regularly or is caused to slow-down, stop and then start again.

A further important object of the present invention is to allow the automatic painting even on zones which are difficult to reach and which require a manual painting when known methods are used.

A still further object of the present invention is to conceive an automatic painting process allowing a very accurate programming so that the possibilites offered by painting machines are exploited at the utmost while times necessary for said processes are reduced.

These and other objects which will appear from the following description are attained by the process according to the present invention for the automatic painting of pieces fed in along a processing line, which utilizes on the line itself at least a painting machine, such as a so-called painting robot preferably of the kind provided with an articulated arm, carrying a spraying device and controlled, by means of corresponding actuators and position transducers, by an electronic equipment suitable to store a number of predetermined processing procedures and to pilot the painting machine according to said procedures, so that said device can be operated in space, time and mode according to a desired program and a particular routine, said process being characterized in that it provides the reciprocating motion of said painting machine in a direction which is substantially parallel to the axis of said processing line, being possible to vary, when desired, the relative speed of said painting machine with respect to said pieces to be painted.

In this way the painting machine can move together with the piece being painted at the same speed or at different speeds so that the spraying device can reach even hidden areas, or it can move in the opposite direction with respect to the feeding in direction of pieces in order to reduce the painting time. In addition, the painting machine can go on moving while the processing line is slowing down or stopping, so that painting can be regularly carried out even in these cases.

Other features and advantages of the invention will become more apparent from the detailed description of a preferred embodiment of a painting process according to the invention given hereinafter by way of example only with reference to the accompanying drawings, in which:

- Fig. 1 is a plan view of a pair of equipments suitable to carry out the process of the invention;

- Fig. 2 is a side view of the equipments shown in Fig. 1;

- Fig. 3 is a front view of the equipments shown in Fig. 1;

- Fig. 4 is a side view to an enlarged scale of an equipment showing the chain drive system;

- Fig. 5 is a plan view of the chain drive system;

- Fig. 6 is a cross-sectional view of the magnetic system keeping the links of chain in a vertical position;

- Fig. 7 is a cross-sectional view of a preferred embodiment of the truck sliding on a track;

- Fig. 8 is a plan view of the truck seen in Fig. 7;

- Fig. 9 is a part sectional front view of the device for taking up slacks related to the truck wheels.

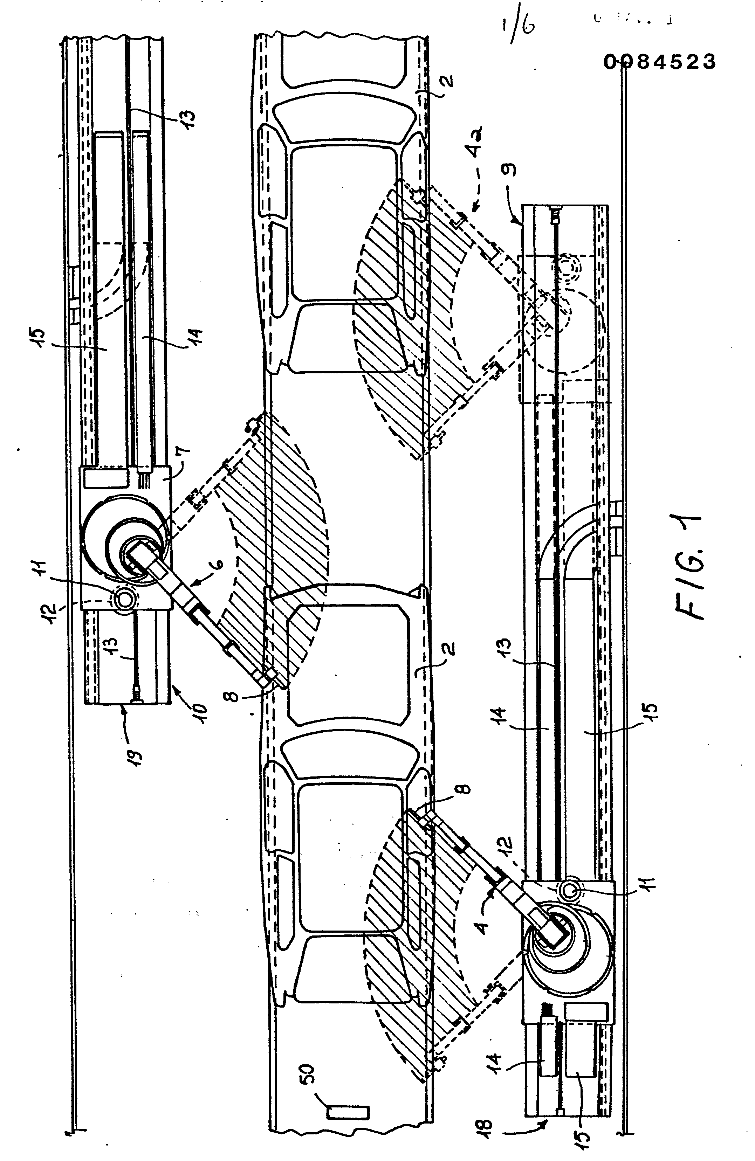

Referring to the drawings, it has been generally indicated at 1 a tunnel for the automatic painting of the bearing bodies of cars 2, fed in uninterruptedly by a conveyer along a processing line 3. An arrow A in Fig. 1 shows the feeding direction of line 3. Painting robots are arranged on both sides of line 3, said robots being of the kind provided with an articulated arm, mounted however, according to the present invention, on respective trucks slidable in a direction parallel to axis 3a of line 3.

More particularly, in this embodiment, it has been indicated at 4 a first painting robot placed at one side of line 3 and mounted on a respective truck 5 and at 6 a second painting robot placed on the opposite side and mounted on a respective truck 7. Obviously along line 3 on both sides thereof other painting robots can be arranged which are also mounted on respective trucks, disposed in a line one after the other or, if more appropriate, traditional robots can be arranged on one side of the line, these robots cooperating with robots mounted on slidable trucks disposed on the opposite side. Each robot carries a spraying device 8 fed in a known manner and movable by means of actuators disposed close to the several articulated joints where position transducers are placed too, which are connected to an electronic equipment suitable to give the different commands and store the predetermined processing procedures.

Trucks 5 and 7 slide with alternate backward and forward motion along tracks 9 and 10 arranged on beds 18 and 19 parallel to axis 3a of line 3, these tracks extending for a certain length in order to allow a sufficient displacement of the same trucks so that the different painting steps can be carried out.

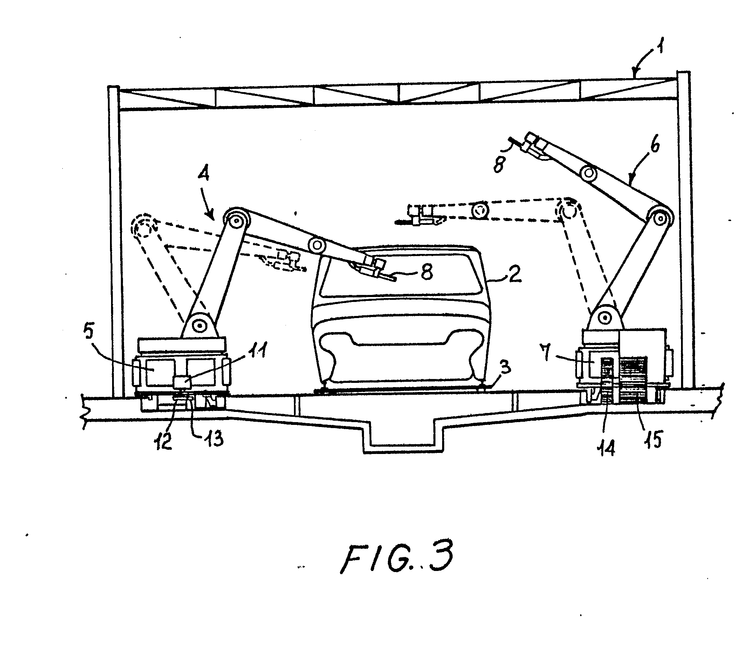

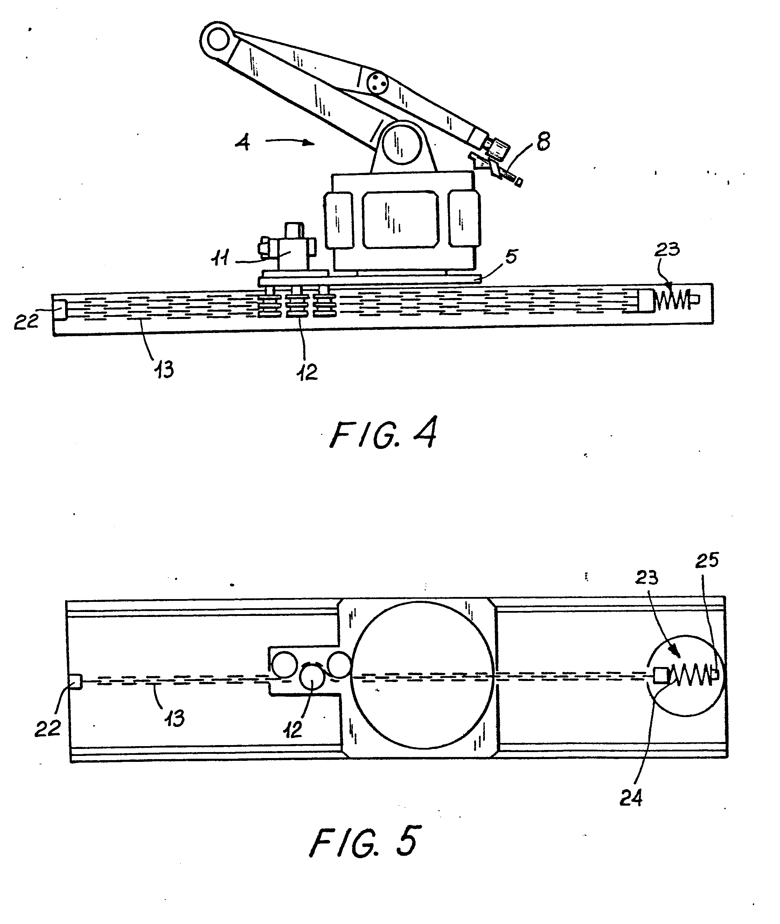

Each of said trucks 5 and 7 moves along its track by the action of a hydraulic motor 11 or the like, which causes a vertical axis toothed wheel 12 to rotate (Figs. 1, 2, 3 and 4), which meshes with a fixed chain 13, parallel to axis 3a of line 3.

In order to assure a correct winding up of chain 13 around the toothed wheel 12, two idler wheels 20 and 21 are provided on the opposite side of chain 13 with respect to that on which toothed wheel 12 acts. The end portions 13a and 13b of chain 13 are fixed to the respective beds 18 and 19 by an anchorage 22 and by spring means 23 respectively which allow the chain to be constantly tightened. Preferably this spring means comprises a cup-shaped spring preloaded by means of a nut 25, which allows to obtain the complete absence of slack between motor 11 and chain 13, this condition being absolutely necessary in an endless control system.

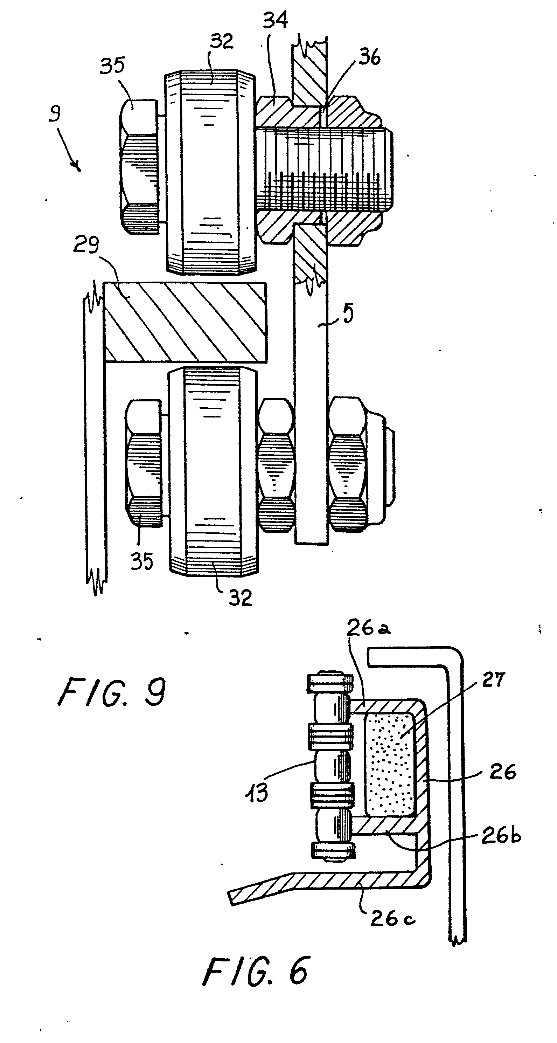

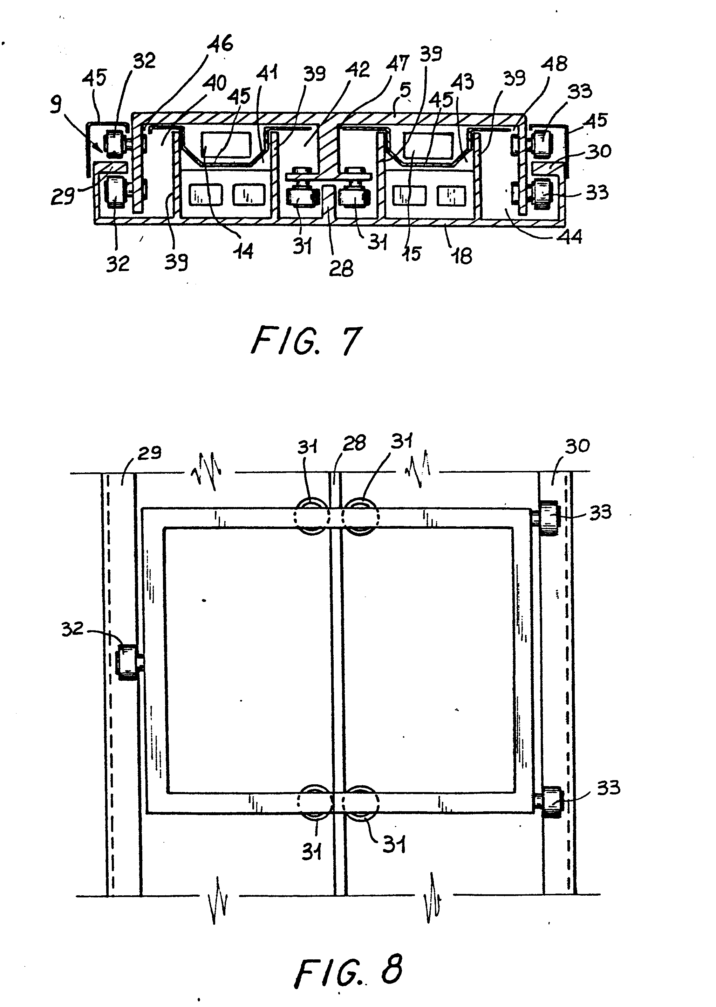

Furthermore, as chain 13 must necessarily have a considerable length with respect to its cross sizes, it is necessary that all links of the chain are kept in a vertical position. For the purpose a magnetic system is provided comprising an E-shaped metal strip 26 and a magnet 27 which run parallel to chain 13 (Fig. 6). Magnet 27 is placed between the upper arms 26a and 26b of the E-shaped strip 26, which therefore form the pole pieces of the magnetic system while the lower arm 26c is slightly wider than the others so that it forms an inclined surface for chain 13. Therefore the latter is always fastened to the magnetic system except when it is close to the toothed wheel 12.

According to a preferred embodiment of the present invention, sliding tracks 9 and 10 are defined by respective groups of three rails which project from beds 18 and 19. More particularly, referring to Figs. 7 and 8, where the only bed 12 has been shown for the sake of simplicity, the corresponding track 9 comprises a central rail 28 having a vertical transverse axis and two side rails 29 and 30, having a horizontal transverse axis. On the central rail 28 are engaged at least two pairs of wheels 31 centrally mounted, with a vertical axis, on the base of truck 5, while on the side rails are respectively engaged a pair of wheels 32 and two pairs of wheels 33 horizontally disposed at the sides of truck 5.

In addition, on one wheel of each pair of said wheels (Fig. 9) is also provided a device for taking up slacks comprising a tubular eccentric body 34 which is mounted on the shank of screw 35 supporting one of the wheels 32 and is rotatably engaged within a bearing hole 36 formed in truck 5. A nut 37 allows wheel 32 to be locked after the adjustment thereof. In this way it is possible to eliminate any slack between the different pairs of wheels and the corresponding rails.

Furthermore it is to be noted that, owing to the arrangement shown in Fig. 7, the absence of slack is also assured in a transverse and torsional direction along the vertical axis (central wheels 31 engaging on rail 28), as well as in a vertical and torsional direction along the longitudinal axis (side wheels 32 and 33 engaging on rails 29 and 30 respectively).

Lastly, beds 18 and 19 are provided with a plurality of bulkheads 39 which extend parallel to the corresponding tracks 9 and 10 in order to define a series of channels indicated by reference numerals 40 to 44 in Fig. 7. Said channels are covered by a plurality of suitably shaped guards 41; it is to be noted that channels 41 and 43 are arranged to accommodate flexible ducts 14 and 15 suitable to contain the connecting cables for robots and hoses for oil under pressure, air and paint, while channels 40, 42 and 44 are arranged for blowing in air which then goes out through slits 46, 47, 48 in such a way to prevent dust and dirt from reaching wheels, tracks and chain.

Robots 4 and 6 can slide to and fro along tracks 9 and 10,the supply connection being always kept. Furthermore, each hydraulic actuator is always controlled by servovalves and position transducers, for example consisting of resolvers, electrically connected to the electronic equipment.

An appropriate device, such as for example a resolver 50, is provided which reports the speed information of the processing line, in order to allow a complete synchronization of the spraying units with the processing line itself. A hydraulic device is also provided which powers the actuators and hydraulic motors intended for the painting units (robots mounted on trucks), suitable flexible connections being arranged.

The operation of the above described apparatus is as follows.

The painting units, consisting of robots mounted on their respective trucks, either can move to and fro along tracks 9 and 10 or can be kept stationary, in connection with the different processing procedures.

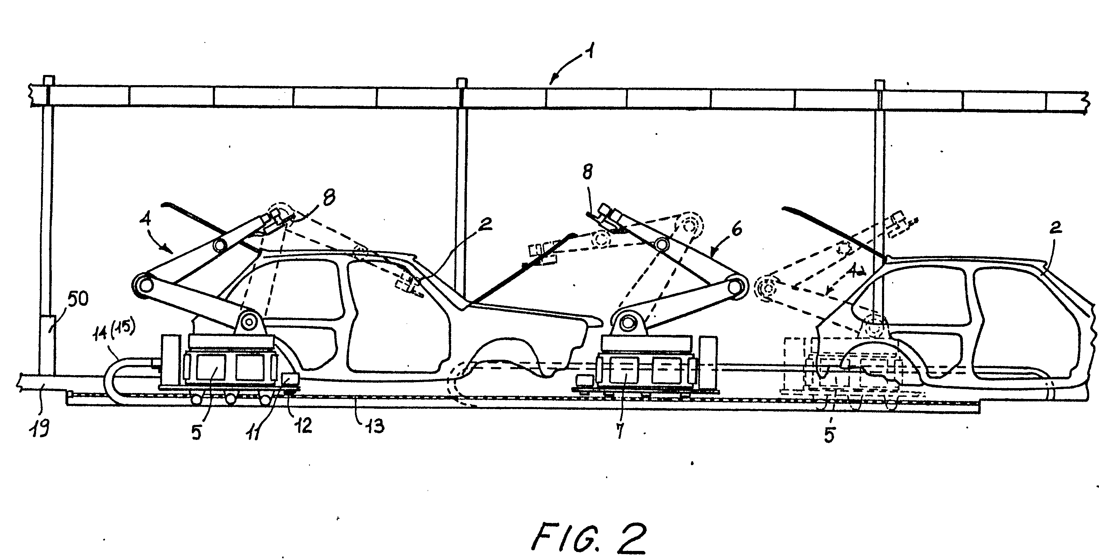

Thus robot 4 can move from the position shown in solid line (Figs. 1 and 2) to that shown in dotted line at 4a, then again to the starting position and so on.

Likewise, robot 6 can move from the position shown in solid line to that shown in dotted line, at 6a, and vice versa.

The displacement speeds can be varied at will from zero to a speed equal or even higher than the nominal speed of the processing line (that is the speed of the conveyer which feeds in pieces 2 to be painted), in either direction. Speed variations can be suitably scheduled and stored in the electronic equipment.

Keeping in mind that spray guns have a rather reduced delivery range and a very limited area of variation of parameters air-paint in which the arrangement quality-quantity is the best, it must be pointed out that, in order to have a uniform painting the thickness of which be as constant as possible, it is necessary that the painting gun of each operating unit moves at a relative speed gun-piece to be painted.

For example, if the piece conveyer moves at a nominal speed, robots 4 and 6 can execute the painting cycle without displacing (that is trucks 5 and 7 are station ary). Always by way of example, if the conveyer displaces at a lower speed than the nominal one (for example because the following paint drying furnace has not reached the proper temperature and painted pieces must remain therein longer), robots 4 and 6 will execute the processing cycle moving in an opposite direction with respect to the feeding in direction A of pieces, at a speed equal to the difference between the conveyer nominal speed and said slower speed, this being made possible by the presence of trucks.

On the contrary, if the conveyer advances at a higher speed than the nominal one, robots will execute the processing cycle moving in the same direction A as the conveyer at a speed equal to the difference between said higher speed and the nominal speed.

Robots can therefore carry out the painting keeping constant parameters while varying the conveyer speed. If the conveyer suddenly stops, as soon as this happens, the painting units will automatically displace in the opposite direction with respect to the feeding in direction A, at a speed equal to the nominal one, so that the relative speed gun-piece is still steady. This displacement will last till the conveyer starts again its moving. Should the latter stop for a longer period than it is necessary to paint the concerned piece, the painting units will go on displacing, as seen above, till the end of the cycle when they return to their waiting position.

In this way no stops in painting can occur, so that no-painted areas can exist, which on the contrary happens when methods of the prior art are used, in the event of stops of the conveyer.

Furthermore, the possibility of moving of the painting units allows them to perfectly paint even areas which are difficult to reach; in fact, when traditional methods are used, owing to their being stationary, these areas are badly painted or are not painted at all and require a further manual painting. In fact, with the movable units of the present invention it is possible to take the spraying guns to the desired zones, for example even before the same zones to be painted are at a right distance, so that the latter can then be painted by the same units accompanying the movement of the piece being painted, which allows the gun to be suitably displaced towards the innermost points, without creating any interference with the moving piece.

It is also possible to move the painting units very fast, so that they are not kept inactive in zones where painting is not necessary, thus reducing the time of the processing cycle.

It is to be noted that the equipment of the present invention allows to achieve the greatest capacity exploitation of a painting apparatus. For this purpose the motion of translation of each painting unit is used, causing it to move during the processing cycle, in a direction opposite to the feeding in direction of pieces to be painted, at the same time increasing the delivery of paint in order to reduce the time required for the

0084523

- 14 -

same processing cycle, at first rising the period of stop. As soon as this operation has been carried out on all painting units of the line, idle times can be verified and therefore the conveyer speed can be increased as much as to attain a nearly null idle time and consequently a higher production per hour, the apparatus capacity being at the utmost.

In addition, the apparatus according to the present invention allows an easy change of painting colours, acting on the same processing line, without being necessary to reset the whole program, which is on the contrary necessary with the methods actually in use.

In fact, it is known that paint hiding power generally varies from one colour to another so that, in order to obtain the same hiding power when colour has to be changed, it is necessary to carry out suitable adjustments, these adjustments even requiring a different programming for each colour. That means that with known methods different processing cycles have to be scheduled and the new programs must be stored, one by one, by the electronic equipment, the number of cycles being substantially equal to that of the designed colours. Therefore storages having a great capacitance are required and consequently very complicated and expensive electronic equipments, while the programming operations are very difficult.

On the other hand, with known systems it is not possible to avoid the above operations, but having resort to an arrangement which combines the different painting parameters in order to obtain a cycle which has an average suitability for the different colours according to their hiding power; however a satisfactory result cannot be reached above all with some colours.

By the process of the present invention it is possible to obviate the drawbacks related to the change of colours; in fact robots can keep the same processing cycle while it is only necessary to change, by turns according to the colour to apply, the displacement speed of the painting units along tracks 9 and 10. It is thus possible to obtain a satisfactory painting in any colour without complicating the programming and the electronic equipment too much.

In fact, when colour has to be change, it is sufficient that the electronic equipment issues a signal corresponding to the colour which has to be used, suitable to cause the painting units to move at a relative speed proportionate to the hiding characteristics of the colour itself.

As to the programming, it is possible to act as follows. The line being stopped, the teaching is carried out utilizing the same operating painting unit, such as robots 4 and 6 mounted on their respective trucks 5 and 7. In this case lines are traced on a pattern piece these lines representing the trajectory of the paint spray, and being then divided in portions having a suitable length, in order to obtain a series of points towards which the spraying gun has to be directed (or a paintbrush, a pencil or the like associated to the gun). Keeping the pattern stationary and acting on a push-button panel, the painting unit is operated, causing it to move along its respective tracks, and moving the gun till it is directed, as it goes along, towards the marked points, these points being stored.

An advantage of this procedure is that the teaching can be carried out without interfering with the working shifts and therefore with normal production. A further advantage is that it is possible to obtain a better painting because the painting of a stationary piece (or the simulation of its painting) allows to concentrate the attention on the concerned portion, without being afraid that the piece being painted may go out of the processing area of the painting unit. In this case too it is always possible to carry out the teaching using a teaching unit having a light structure which can be operated by a skilled operator.

However the use of a push-button panel operated by means of a normal operating unit for carrying out the teaching has a further advantage: as there is no operator by the robot, the programmed movements can be faster and more complicated than the operator's wrist could effect, while no obstacle exists due to the presence of the operator. Thus, it is possible to better exploit the mechanical possibilites of the painting unit, in order to make the painting cycle quicker and more efficient.

It must be pointed out that by the use of this type of teaching based on points the spraying gun can follow trajectories and speeds which coincide with the theoretical ideal ones and that the programmed displacement speeds, when the spraying procedure is not taking place, can be nearly as high as those allowed by the actuators of said robots, so that idle times in a painting cycle can be considerably reduced.

As the tracing is carried out when the piece is stationary, the same can be carefully studied while the programming is faultless, which could not be possible when the teaching is carried out by hand.

As the process according to the present invention provides the longitudinal displacement of the painting units, it is possible to achieve a remarkable progress in carrying out the painting of moving pieces, as the processing times are reduced while the work appears more accurate, being possible to execute a complete painting of the whole piece, also reaching the most hidden areas, no further retouch being required.

It is also to be noted that the arrangement for carrying out the process of the invention is suitable to bear parallelism errors between the two side rails as well as between the central rail and the side rails. In fact, side rails can converge or diverge with respect to each other or to the central rail because only the latter is the guide for a truck. Furthermore, side rails can rise or lower with respect to each other without giving rise to interferences as each truck is provided with three pairs of side wheels, two of which on one side (33) and one on the opposite side (32).

Obviously the embodiment of the invention described above is not intended to comprise a limitation and modifications can be carried out without departing from the spirit and scope of the invention itself.

For example the equipment can provide longitudinal displacement means for each painting unit having whatever structure, different from that described above, using for example a jack, an electromagnetic device or the like as displacement members.

In addition, the longitudinal sliding tracks can be disposed not only on the ground but also at a certain height from earth.

C L A I M S

1. A process for automatically painting pieces fed in along a processing line which utilizes on the line itself at least a painting machine, such as a so-called painting robot, preferably of the kind provided with an articulated arm, carrying a spraying device and controlled, by means of corresponding actuators and electrical position transducers, by an electronic equipment suitable to store a number of predetermined processing procedures and to pilot the painting machine according to said procedures, so that said spraying device can be operated in space, time and mode according to a desired programming, characterized in that it provides the reciprocating motion of said painting machine in a direction which is substantially parallel to the axis of said processing line, being possible to vary, when desired, the relative speed of said painting machine with respect to said piece to be painted.

2. A process according to claim 1, characterized in that said reciprocating motion of the painting machine goes on also when said processing line stops and pieces are therefore stationary for an undetermined period, for any reason, so that painting can continue under these conditions too.

3. A process according to claims 1 and 2, characterized in that the relative displacement speed of said painting machine in a direction parallel to the axis of the processing line, with respect to the feeding in speed of said pieces along the same line, is kept constant.

4. A process according to claim 1, characterized in that the programming step, with storage in said electronic equipment, is carried out when said processing line is stationary, moving said painting machine in said direction.

5. A process according to claim 1, characterized in that said programming step is carried out per points, after tracing on one of said pieces the trajectories related to the painting spray, by mechanically moving and operating said painting machine so that said spraying device is successively directed towards the different points of said tracing, each time storing said points.

6. A process according to claim 1, characterized in that the displacement relative speed of said painting machine in said direction with respect to the feeding in speed of said pieces is each time adjusted in connection with the hiding characteristics of the colour used, while keeping each processing cycle unchanged independently of the colour.

7. An apparatus for carrying out the process depicted in claims 1 to 6, characterized in that it comprises a painting machine, such as a so-called painting robot, preferably of the kind provided with an articulated arm carrying a spraying device and controlled, by means of corresponding actuators and position transducers, by an electronic equipment suitable to store a number of predetermined processing procedures and to pilot the painting machine according to said procedures in a repeated manner, so that said spraying device can be operated in space, time and mode according to a desired
programming, characterized in that said painting machine
is mounted on a truck which slides with alternate backward and forward motion on tracks in a direction substantially parallel to the axis of said processing line,
means being provided to control the displacement of
said painting machine in said direction and to vary the
displacement relative speed of the same painting machine
at will with respect to the pieces being painted.

8. An apparatus according to claim 7, characterized in
that it comprises a position transducer which detects
the displacements of said painting machine in said
direction, this position transducer being connected
to said electronic equipment so that the latter can
store the electrical signals issued by the transducer
itself.

9. An apparatus according to claim 7, characterized in
that the tracks on which each truck slides are formed
in corresponding beds and consist of sets of three
rails in which the central rail has a vertical transverse
axis and the side rails have horizontal transverse axis,
said truck being provided with at least two pairs of
vertical axis wheels which engage with said central rail
and with pairs of horizontal axis wheels disposed at
both sides thereof which engage with said side rails.

10. An apparatus according to claim 9, characterized in
that one wheel of each pair of said wheels of the truck
is provided with a device to take up slacks, comprising
a tubular eccentric body which can be mounted on the

0084523

- 22 -

screw which supports and locks the wheel to the truck.

11. An apparatus according to claim 7, characterized in that it comprises a device suitable to pick up information concerning the speed of the line so that the latter can be synchronized with the spraying units.

12. A process and an apparatus for automatically painting pieces fed in along a processing line as hereinbefore described with reference to the accompanying drawings.

FIG. 1

FIG. 2

FIG.3

*FIG. 4*

*FIG. 5*

FIG. 9

FIG. 6

6 TAV VI
0084523

*FIG. 7*

*FIG. 8*